# EUROPEAN PATENT APPLICATION

(11) **EP 4 006 484 A1**
(43) Date of publication of application: **01.06.2022**
(21) Application number: 19938130.2
(22) Date of filing: 24.07.2019
(51) Int. Cl.: G01B 11/16

(54) **STRAIN DETECTION DEVICE**

(71) Applicant: The Chugoku Electric Power Co., Inc., Hiroshima-shi, Hiroshima 730-8701 (JP)
(72) Inventor: NISHIDA, Hidetaka, Hiroshima-shi, Hiroshima 730-8701 (JP)
(74) Representative: Hoffmann Eitle
(86) International application number: PCT/JP2019/028969
(87) International publication number: WO 2021/014602

(57) **Abstract**

A strain detector 1 includes: a metal plate 4 that is fixed to a first end 210 of a first tube 21 and a second end 220 of a second tube 22 while the metal plate 4 straddles a weld 3 between the first end 210 and the second end 220, the first tube 21 and the second tube 22 forming part of a boiler tube 2; and an optical fiber 5 that is fixed to a top of the metal plate 4 and that extends in an axial direction (a first direction D1) of the first tube 21 and the second tube 22. In this manner, the metal plate 4 is fixed to the first tube 21 and the second tube 22 while straddling the weld 3, and the optical fiber 5 is fixed to the top of the metal plate 4, which enables the strain detector 1 to accurately detect a strain in the weld 3 of the boiler tube 2.

## Description

### Field

The present invention relates to a strain detector.

### Background

Strain detectors have been publicly known that use the property of Brillouin scattering light generated inside optical fibers that its frequency changes due to strains (Patent Literature 1, for example). A strain detector disclosed in Patent Literature 1 detects the amount of strain in the axial direction of a cable bolt, which is an object to be measured.

### Citation List

### Patent Literature

Patent Literature 1: Japanese Patent Application Laid-open Publication No. 2004-77362

### Summary

### Technical Problem

For example, boiler tubes of a thermal power plant have high-temperature and high-pressure steam constantly passed through the inside thereof, and thus exhibit characteristics of being prone to creep. Also, welds of the boiler tubes are more prone to damage due to creep than general parts other than the welds are. Consequently, in the boiler tubes, it is important to detect a strain in the welds in order to detect signs of damage before it happens.

The present invention is made in view of the above problem, and it is an object of the present invention to provide a strain detector capable of accurately detecting a strain in a weld of a boiler tube.

### Solution to Problem

A strain detector according to an aspect of the present invention includes: a metal plate fixed to a first end of a first tube and a second end of a second tube while the metal plate straddles a weld between the first end and the second end, the first tube and the second tube forming part of a boiler tube; and an optical fiber fixed to a top of the metal plate and extending in an axial direction of the first tube and the second tube.

### Advantageous Effects of Invention

According to an aspect of the present invention, a strain detector capable of accurately detecting a strain in a weld of a boiler tube can be provided.

### Brief Description of Drawings

FIG. 1 is a perspective view schematically illustrating a strain detector according to an embodiment and a boiler tube to which the strain detector is provided.
FIG. 2 is a section view taken along line II-II of FIG. 1.
FIG. 3 is a section view taken along line III-III of FIG. 2.
FIG. 4 is an enlarged perspective view of the strain detector in FIG. 1.

### Description of Embodiments

Embodiments of the present invention will be described below with reference to the drawings. The disclosure is made by way of example only, and the scope of the present invention shall naturally include changes made as appropriate while the gist of the invention is maintained that a person skilled in the art could easily conceive of. The drawings may schematically illustrate the widths, thicknesses, shapes, or the like of components as compared with the actual aspects for the sake of clear description, but are examples only and are not intended to limit interpretation of the present invention.

In the present description and the drawings, the same components as those mentioned earlier regarding drawings that have previously been discussed may be given identical reference signs, and detailed description thereof may be omitted as appropriate. In the following description, a first direction D1 serving as a direction in which an object to be measured extends is the axial direction of a first tube 21 and a second tube 22. A direction orthogonal to the first direction D1 is a second direction D2.

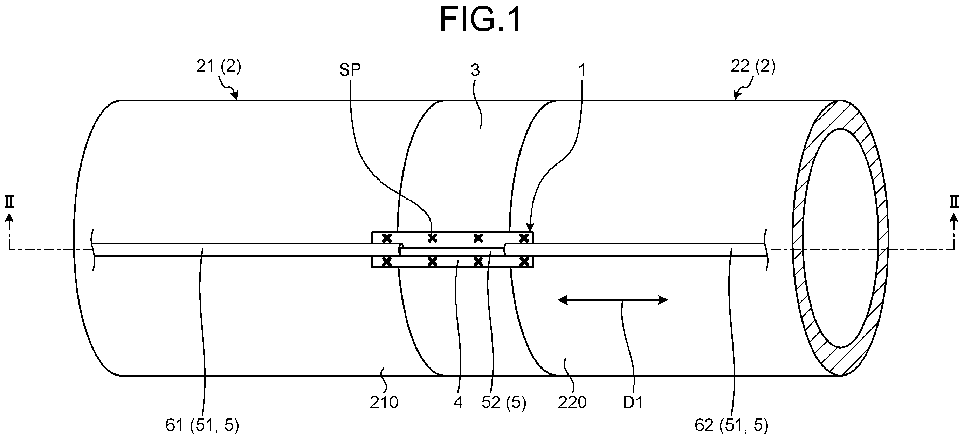

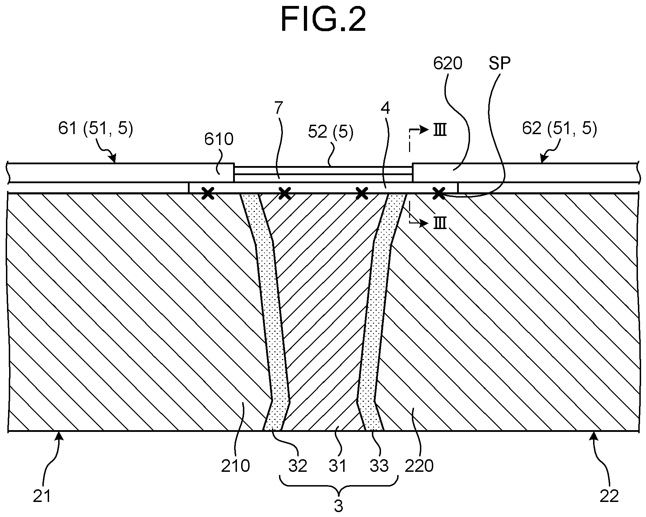

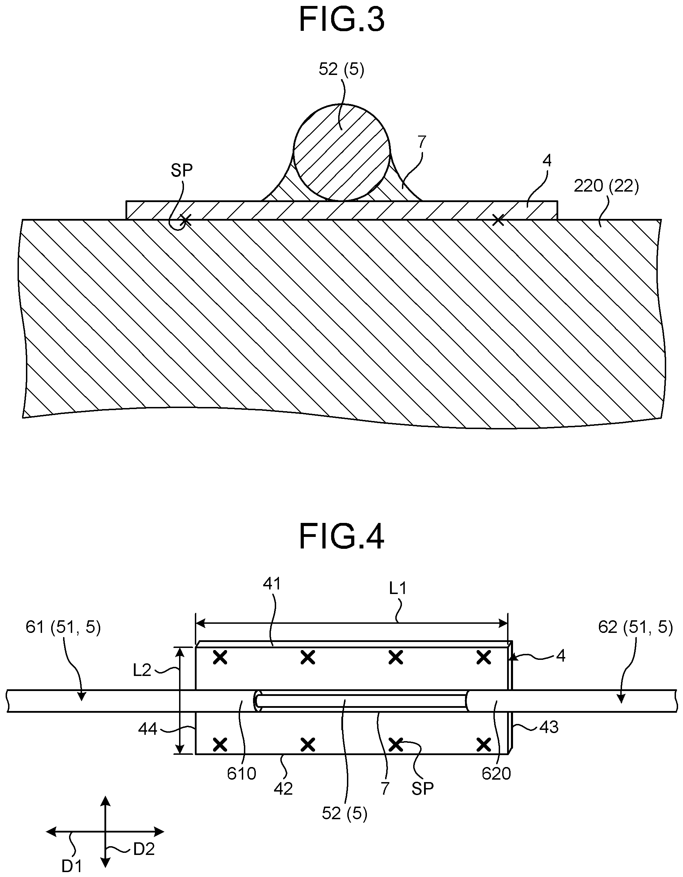

FIG. 1 is a perspective view schematically illustrating a strain detector 1 according to an embodiment and a boiler tube 2 to which the strain detector 1 is provided. FIG. 2 is a section view taken along line II-II of FIG. 1. FIG. 3 is a section view taken along line III-III of FIG. 2. FIG. 4 is an enlarged perspective view of the vicinity of the strain detector 1 in FIG. 1.

The strain detector 1 is applied to measure a strain in a weld 3 of a boiler tube 2 of a thermal power plant illustrated in FIG. 1, for example. The boiler tube 2 extends from a boiler to a steam turbine. High-temperature and high-pressure steam generated by the boiler constantly passes through the inside of the boiler tube 2. That is, the high-temperature and high-pressure steam generated by the boiler is constantly conveyed through the boiler tube 2 to the steam turbine. If a constant load is applied to a metal member, a metal product, or the like for a long time, creep may occur in which a deformation of the metal member or the like is increased. The boiler tube 2 is thus prone to creep under such high temperature conditions. In the boiler tube 2, the weld 3 is prone to damage. For this reason, the strain detector 1 detects a strain in the weld 3 of the boiler tube 2.

The boiler tube 2 includes the first tube 21, the second tube 22, and the weld 3 that joins the first tube 21 to the second tube 22. That is, the first tube 21 extends in the first direction D1, and the first tube 21 also extends in the first direction D1. The first tube 21 and the second tube 22 form part of the boiler tube 2. The axis of the first tube 21 corresponds to the axis of the second tube 22. A first end 210 of the first tube 21 in the first direction D1 is joined to a second end 220 of the second tube 22 in the first direction D1 through the weld 3.

The boiler tube 2 is a high chromium ferritic steel tube, for example. The material of the first tube 21 is the same as the material of the second tube 22. Thus, in an embodiment, the first tube 21 and the second tube 22 are both high chromium ferritic steel tubes. In the present embodiment, however, the materials of the first tube 21 and the second tube 22 are not limited to high chromium ferritic steel.

The weld 3 includes a weld metal 31 and heat-affected portions 32, 33.

The weld metal 31 is high chromium ferritic steel, for example. The heat-affected portions 32, 33 are disposed on the sides of the weld metal 31 in the first direction D1, respectively. The heat-affected portion 32 is located between the first tube 21 and the weld metal 31. The heat-affected portion 33 is located between the second tube 22 and the weld metal 31. The heat-affected portions 32, 33 are portions that have been affected by heat when the first tube 21 and the second tube 22 were welded using the weld metal 31. The heat-affected portions 32, 33 have properties including a mechanical property that are different from those of the first tube 21, the second tube 22, and the weld metal 31.

The strain detector 1 includes a metal plate 4 and an optical fiber 5.

The metal plate 4 is fixed to the first end 210 of the first tube 21 and the second end 220 of the second tube 22. In other words, the metal plate 4 is joined to the first end 210 of the first tube 21 and the second end 220 of the second tube 22 by spot welding while straddling the weld 3. Spot-welded portions are indicated as SP. The material of the metal plate 4 is the same as the materials of the first tube 21 and the second tube 22. In an embodiment, the material of the metal plate 4 is high chromium ferritic steel. In the present embodiment, however, the material of the metal plate 4 is not limited to high chromium ferritic steel.

The optical fiber 5 extends in the first direction D1. The optical fiber 5 includes clad portions 51 accommodated in metal tubes 61, 62, and an exposed portion 52 exposed from the metal tubes 61, 62.

The materials of the metal tubes 61, 62 are stainless steel, for example. The metal tubes 61, 62 each have a diameter of from 0.5 mm to 1 mm inclusive, for example. Ends 610, 620 of the metal tubes 61, 62 are placed on the metal plate 4. The exposed portion 52 is soldered to the top of the metal plate 4, as illustrated in FIG. 3. That is, the exposed portion 52 of the optical fiber 5 is joined to the top of the metal plate 4 through a soldered portion 7, as illustrated in FIG. 3.

Solder used for soldering includes at least one of Ni (nickel), Au (gold), and Fe-Cr alloy, for example. Si, B, Cr, or the like can be added to Ni to lower the melting point, thereby enhancing wettability. Solder containing Ni has autogenous meltability at a low melting point, excellent wettability for an iron-based preform, and also excellent corrosion resistance. Solder containing Au has excellent corrosion resistance.

As illustrated in FIG. 4, the metal plate 4 is rectangular in a planar view. The metal plate 4 has a first side 41 and a second side 42 that extend in the first direction D1, and a third side 43 and a fourth side 44 that extend in the second direction D2. The lengths of the first side 41 and the second side 42 along the first direction D1 is L1. The lengths of the third side 43 and the fourth side 44 along the second direction D2 is L2. The distance between the first side 41 and the second side 42 is the length L2. The distance between the third side 43 and the fourth side 44 is the length L1. The length L1 is longer than the length L2. The length L1 is from 50 mm to 70 mm inclusive, for example. The length L2 is 10 mm, for example. The thickness of the metal plate 4 is from 0.5 mm to 1 mm inclusive, for example.

The spot-welded portions SP are arranged at both ends of the metal plate 4 in the second direction D2. In an embodiment, four spot-welded portions SP are arranged at regular intervals along the first direction D1 at the upper end of the metal plate 4 in FIG. 4. Four spot-welded portions SP are arranged at regular intervals along the first direction D1 at the lower end of the metal plate 4 in FIG. 4. The optical fiber 5 is disposed in the center of the metal plate 4 in the second direction D2. Consequently, the spot-welded portions SP arranged at the upper end in FIG. 4 and the spot-welded portions SP arranged at the lower end in FIG. 4 are arranged symmetrically with the optical fiber 5 therebetween.

A procedure for installing the strain detector 1 according to the embodiment will be briefly described next.

The metal plate 4 is first joined to the boiler tube 2. Specifically, the metal plate 4 is placed so as to straddle the weld 3 between the first tube 21 and the second tube 22, and the metal plate 4 is spot-welded to the first end 210 of the first tube 21 and the second end 220 of the second tube 22.

Subsequently, the optical fiber 5 is inserted into the metal tubes 61, 62. The metal tubes 61, 62 are cylindrical members containing stainless steel, for example. By inserting the optical fiber 5 into the metal tubes 61, 62, the optical fiber 5 is covered with the metal tubes 61, 62.

Furthermore, the metal tubes into which the optical fiber 5 has been inserted are placed on the outer surface of the boiler tube 2. Portions of the metal tubes corresponding to the metal plate 4 are stripped off, to expose the optical fiber 5. As a result, the optical fiber 5 includes the clad portion 51 in which the optical fiber 5 is covered with the metal tubes 61, 62, and the exposed portion 52 in which the optical fiber 5 is exposed from the metal tubes 61, 62.

Thereafter, the exposed portion 52 of the optical fiber 5 is soldered to the metal plate 4, and the solder is cooled and solidified, whereby the exposed portion 52 of the optical fiber 5 is fixed to the metal plate 4 through the soldered portion 7.

As described above, the strain detector 1 according to the present embodiment includes: the metal plate 4 that is fixed to the first end 210 of the first tube 21 and the second end 220 of the second tube 22 while straddling the weld 3 between the first end 210 and the second end 220; and the optical fiber 5 that is fixed to the top of the metal plate 4 and that extends in the axial direction (the first direction D1) of the first tube 21 and the second tube 22. As mentioned earlier, in the boiler tube 2, the weld 3 has lower toughness than general parts other than the weld 3, and thus the weld 3 is prone to damage. The boiler tube 2 is also prone to creep under high temperature conditions. Consequently, in the boiler tube 2, it is important to detect a strain in the weld 3 in order to detect signs of damage before it happens. Therefore, the strain detector 1 according to the present embodiment accurately detects a strain in the weld 3 of the boiler tube 2. Specifically, in the strain detector 1, the metal plate 4 is fixed to the first tube 21 and the second tube 22 while straddling the weld 3, and the optical fiber 5 is fixed to the top of the metal plate 4, which enables the strain detector 1 to accurately detect a strain in the weld 3 of the boiler tube 2.

The material of the first tube 21 is the same as the material of the second tube 22, and the material of the metal plate 4 is the same as the materials of the first tube 21 and the second tube 22. Thus, the materials of the first tube 21, the second tube 22, and the metal plate 4 are all the same. Consequently, the strength of joining the first tube 21 to the second tube 22 is higher than a case in which the material of the first tube 21 is different from the material of the second tube 22. The strength of joining the metal plate 4 to the first tube 21 and the second tube 22 is also higher than a case in which the material of the metal plate 4 is different from the materials of the first tube 21 and the second tube 22.

The optical fiber 5 is soldered to the metal plate 4. The outer surface of the metal plate 4 is less uneven than those of the first tube 21 and the second tube 22. Consequently, the joining strength of the optical fiber 5 is higher than a case in which the optical fiber 5 is directly soldered to the first tube 21 and the second tube 22.

Solder used for soldering includes at least one of Ni, Au, and Fe-Cr alloy. Solder containing Ni has the advantages of autogenous meltability at a low melting point, excellent wettability for an iron-based preform, and also excellent corrosion resistance. Solder containing Au has the advantage of excellent corrosion resistance. Si, B, Cr, or the like can be added to Ni to lower the melting point, thereby enhancing wettability.

The metal plate 4 is rectangular in a planar view extending along the first direction D1 (the axial direction). In the metal plate 4, the length L1 in the first direction D1 is longer than the length L2 in the second direction D2. In this manner, the length L1 along the first direction D1 in which a strain occurs is made longer than the length L2 in the second direction D2, which can prevent the metal plate 4 from having a large area.

The optical fiber 5 has the clad portion 51 and the exposed portion 52. The clad portion 51 is a portion accommodated in the metal tubes 61, 62 extending in the first direction D1 (the axial direction). The exposed portion 52 is a portion fixed to the metal plate 4 exposed from the metal tubes 61, 62. In the clad portion 51, the optical fiber 5 is covered with the metal tubes 61, 62, which reduces damage to the optical fiber 5.

The metal tubes 61, 62 contain stainless steel, which further restrains corrosion of the metal tubes 61, 62.

The metal plate 4 is spot-welded to the first end 210 and the second end 220, which decreases the heat input to the metal plate 4 as compared with fusion welding such as arc welding. Consequently, according to the present embodiment, the metal plate 4 has a small thermal deformation and working time for welding is also short.

The specific components of the strain detector in the above embodiment are examples only, and the components are not limited thereto and may be changed as appropriate.

For example, in the present embodiment, the clad portion 51 in which the optical fiber 5 is accommodated in the metal tubes 61, 62 is provided, but only the exposed portion 52 may be provided without the clad portion 51.

### Reference Signs List

- 1: Strain detector
- 2: Boiler tube
- 3: Weld
- 4: Metal plate
- 5: Optical fiber
- 21: First tube
- 22: Second tube
- 51: Clad portion
- 52: Exposed portion
- 61, 62: Metal tubes
- 210: First end
- 220: Second end
- D1: First direction
- D2: Second direction

## Claims

1. A strain detector comprising:
a metal plate fixed to a first end of a first tube and a second end of a second tube while the metal plate straddles a weld between the first end and the second end, the first tube and the second tube forming part of a boiler tube; and
an optical fiber fixed to a top of the metal plate and extending in an axial direction of the first tube and the second tube.

2. The strain detector according to claim 1, wherein
a material of the first tube is identical to a material of the second tube, and
a material of the metal plate is identical to the materials of the first tube and the second tube.

3. The strain detector according to claim 1 or 2, wherein the optical fiber is soldered to the metal plate.

4. The strain detector according to claim 3, wherein solder used for the soldering includes at least one of Ni, Au, or Fe-Cr alloy.

5. The strain detector according to any one of claims 1 to 4, wherein
the metal plate is rectangular in a planar view extending along the axial direction, and
a length of the metal plate in a first direction along the axial direction is longer than a length of the metal plate in a second direction orthogonal to the first direction.

6. The strain detector according to any one of claims 1 to 5, wherein
the optical fiber has:
a clad portion accommodated in a metal tube extending in the axial direction; and
an exposed portion exposed from the metal tube and fixed to the metal plate.

7. The strain detector according to claim 6, wherein the metal tube contains stainless steel.

8. The strain detector according to any one of claims 1 to 7, wherein the metal plate is spot-welded to the first end and the second end.
